# EUROPEAN PATENT SPECIFICATION

(11) **EP 1 878 010 B1**
(45) Date of publication and mention of the grant of the patent: **05.11.2014**
(21) Application number: 06748775.1
(22) Date of filing: 23.03.2006
(51) Int. Cl.: G10L 19/16

(54) **AUDIO METADATA VERIFICATION**
VERIFIKATION VON AUDIO METADATEN
VERIFICATION DE METADONNEES AUDIO

(30) Priority: 13.04.2005 US 671361 P
(43) Date of publication of application: 16.01.2008
(73) Proprietor: DOLBY LABORATORIES LICENSING CORPORATION, San Francisco California 94103 (US)
(72) Inventor: CROCKETT, Brett Graham, San Francisco California 94103 (US)
(74) Representative: MERH-IP Matias Erny Reichl Hoffmann
(86) International application number: PCT/US2006/011202
(87) International publication number: WO 2006/113062

(56) References cited:
- US-A1- 2001 038 643
- US-A1- 2004 037 421
- US-A1- 2006 002 572
- TIM CARROLL: "Audio Metadata: You can get there from here"[Online] 11 October 2004 (2004-10-11), pages 1-4, XP002392570 Retrieved from the Internet: URL:http://tvtechnology.com/features/audio _notes/f-TC-metadata-08.21.02.shtml> [retrieved on 2006-07-26]
- TRAPPE W ET AL: "Key distribution for secure multimedia multicasts via data embedding" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 7 May 2001 (2001-05-07), pages 1449-1452, XP010803130 ISBN: 0-7803-7041-4

## Description

### Technical Field

The present invention is related to audio signal processing, particularly to the verification and correction of metadata employed in such systems. The invention is particularly useful in audio coding systems known as Dolby Digital (AC-3), Dolby Digital Plus, and Dolby E. Dolby, Dolby Digital, Dolby Digital Plus and Dolby E are trademarks of Dolby Laboratories Licensing Corporation. Aspects of the invention may also be usable with other types of audio coding, such as MPEG-4 AAC.

### Background Art

Details of Dolby Digital coding are set forth in the following references:
ATSC Standard A52/A: Digital Audio Compression Standard (AC-3), Revision A, Advanced Television Systems Committee, 20 Aug. 2001. The A/52A document is available on the World Wide Web at http://www.atsc.org/standards.html.
Flexible Perceptual Coding for Audio Transmission and Storage," by Craig C. Todd, et al, 96th Convention of the Audio Engineering Society, February 26, 1994, Preprint 3796;
"Design and Implementation of AC-3 Coders," by Steve Vernon, IEEE Trans. Consumer Electronics, Vol. 41, No. 3, August 1995.
"The AC-3 Multichannel Coder" by Mark Davis, Audio Engineering Society Preprint 3774, 95th AES Convention, October, 1993.
"High Quality, Low-Rate Audio Transform Coding for Transmission and Multimedia Application," by Bosi et al, Audio Engineering Society Preprint 3365, 93rd AES Convention, October, 1992.
United States Patents 5,583,962; 5,632,005; 5,633,981; 5,727,119; and 6,021,386.
Details of Dolby Digital Plus coding are set forth in "Introduction to Dolby Digital Plus, an Enhancement to the Dolby Digital Coding System," AES Convention Paper 6196, 117th AES Convention, October 28, 2004.
Details of Dolby E coding are set forth in "Efficient Bit Allocation, Quantization, and Coding in an Audio Distribution System", AES Preprint 5068, 107th AES Conference, August 1999 and "Professional Audio Coder Optimized for Use with Video", AES Preprint 5033, 107th AES Conference August 1999.
Details of MPEG-2 AAC coding are set forth in ISO/IEC 13818-7:1997(E) "Information technology - Generic coding of moving pictures and associated audio information -, Part 7: Advanced Audio Coding (AAC)," International Standards Organization (April 1997); "MP3 and AAC Explained" by Karlheinz Brandenburg, AES 17th International Conference on High Quality Audio Coding, August 1999; and "ISO/IEC MPEG-2 Advanced Audio Coding" by Bosi, et. al., AES preprint 4382, 101st AES Convention, October 1996.

An overview of various perceptual coders, including Dolby encoders, MPEG encoders, and others is set forth in "Overview of MPEG Audio: Current and Future Standards for Low-Bit-Rate Audio Coding," by Karlheinz Brandenburg and Marina Bosi, J. Audio Eng. Soc., Vol. 45, No. 1/2, January/February 1997.

Although the invention is not limited to use in AC-3, for convenience it will be described in the environment of the AC-3 system. AC-3 is a digital audio data compression system used for the delivery of audio in applications including digital television, DVD video, and DVD audio. An AC-3 bitstream consists of two key components: audio content and metadata. The audio content of one to six channels is data compressed using perceptual audio coding. Among the various types of metadata in AC-3 are several audio metadata parameters that are specifically intended to change the sound of the program delivered to a listening environment. These are described below.

The AC-3 system delivers a bitstream comprised of data compressed audio in frames of binary information. Each frame contains audio content and metadata for 1536 samples of digital audio. For a sampling rate of 48 kHz, this represents 32 milliseconds of digital audio or a rate of 31.25 frames per second of audio. The number of bits contained in each frame depends on the number of channels being delivered and the amount of data compression that is applied to the channels. For example, DVD videodiscs typically deliver six channels of audio at a data rate of 448,000 bits per second or a frame size of 1792 bytes (a byte being 8 bits).

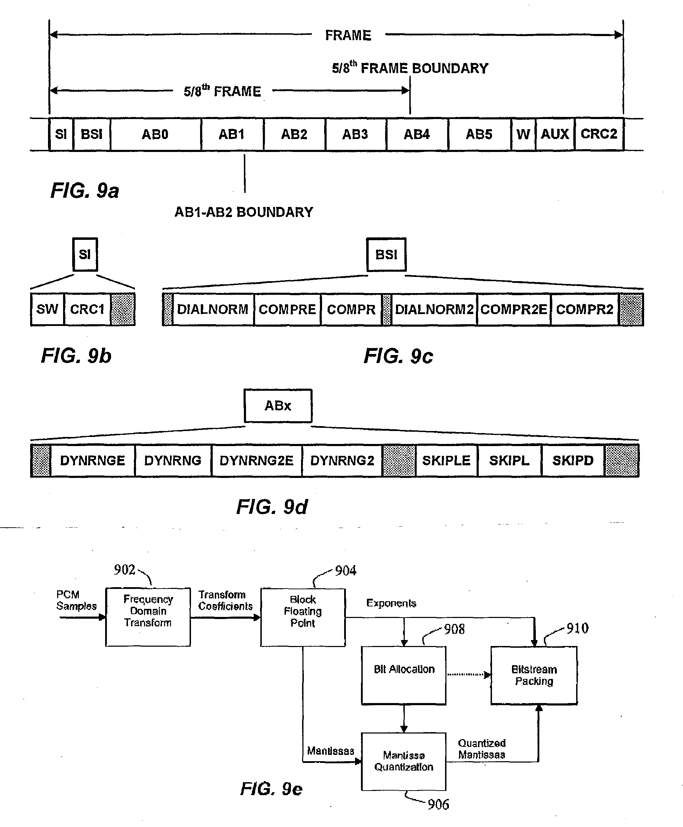

Each AC-3 frame is divided into sections. These include: (1) Synchronization Information (SI), which contains a synchronization word (SW), and the first of two error correction words (CRC1); (2) Bitstream Information (BSI), which contains most of the metadata; (3) six Audio Blocks (AB0 to AB5), which contain the data compressed audio content; (4) waste bits (W), which contain any unused bits left over after the audio content is compressed; (5) Auxiliary (AUX) information, which contains more metadata; and (6) the second of two error correction words (CRC2). These are shown in FIG. 9, which is described further below. The AC-3 frame, including the perceptual audio data compression and the accompanying metadata, are described in detail in the AC-3 references cited above, and below in the description of FIG. 9.

As mentioned above, in AC-3 there are several audio metadata parameters that are specifically intended to change the sound of the program delivered to a listening environment. Three of these metadata parameters relate to playback signal level and dynamic range: DIALNORM, COMPR and DYNRNG. The DIALNORM parameter affects the audio playback signal level, while the related COMPR and DYNRNG parameters, sometimes referred to hereinafter as the "dynamic range compression" parameters) -affect dynamic range of the audio playback signal. One or neither, but not both, of the COMPR and DYNRNG parameters is used in decoding, depending on a decoding mode. DIALNORM typically is set by a user - it is not generated automatically, although there is a default DIALNORM value if no value is set by the user. For example, a user, or "content creator," may make loudness measurements with a process or device external to the AC-3 encoder and then transfer the result into the encoder. Thus, there is a reliance on the user to set the DIALNORM parameter value correctly. The COMPR and DYNRNG parameters, although related to the DIALNORM parameter, typically are calculated automatically during encoding in response to the user-set DIALNORM parameter value and one of a number of dynamic range compression profiles (or no profile, which results in application of DIALNORM but allows reproduction of the full dynamic range). Each such profile contains standard audio dynamic range compression parameter information including attack and release time constants, and compression ratios. Other metadata parameters affecting the sound in a listening environment include the various "downmixing" parameters: CLEV, CMIXLEV, SLEV, SURMIXLEV, MIXLEVEL and MIXLEVEL2. Such downmixing metadata provides instructions to a decoder for downmixing an original 5.1 channels to a fewer number of reproduction channels, one or two channels, for example.

The DIALNORM parameter allows for uniform reproduction of spoken dialogue when decoding any AC-3 bitstream. The subjective level of normal spoken dialogue is used as a reference. Thus, the reproduction system gain becomes a function of both the listener's desired reproduction sound pressure level for dialogue, and the DIALNORM value. Although, in principle, the DIALNORM value may be applied in the time domain subsequent to decoding (either in the digital domain or the analog domain) to adjust the playback gain, AC-3 decoders typically employ the DIALNORM value in the digital domain within the decoder to scale gain, which results in adjustment of the playback gain.

While there are useful tools to conveniently and easily measure the level of dialog in audio content (e.g., the Dolby LM100 loudness meter) and AC-3 provides metadata to convey the level of dialog (using the DIALNORM parameter), there is no way to verify that the DIALNORM value in an AC-3 bitstream has been set correctly and matches the true dialog loudness value of the audio without fully decoding the compressed audio to PCM and performing a loudness measurement with an approved metering technology. Such a full-decoding approach is described in United States Patent Application S.N. 10/884,177, filed July 1, 2004 of Smithers et. al., entitled "Method for Correcting the Playback Loudness and Dynamic Range of AC-3 (Dolby Digital) Compressed Audio Information."

There are several different reasons why the DIALNORM parameter in an AC-3 bitstream may be incorrect. First, as mentioned above, each AC-3 encoder has a default DIALNORM value that is used during the generation of the bitstream if a DIALNORM value is not set by the content creator. This default value, commonly chosen as -27dB, may be substantially different than the actual dialog loudness level of the audio. Second, even if a content creator measures loudness and sets the DIALNORM value accordingly, a loudness measurement algorithm or meter may have been used that does not conform to the recommended AC-3 loudness measurement method, resulting in an incorrect DIALNORM value. Third, even if an AC-3 bitstream has been created with the DIALNORM value measured and set correctly by the content creator, it may have been changed to an incorrect value during transmission and/or storage of the bitstream. For example, it is not uncommon in television broadcast applications for AAC-3 bitstreams to be decoded, modified and then re-encoded using incorrect DIALNORM metadata information. Therefore, while a DIALNORM value is always contained in an AC-3 bitstream, it may be incorrect or inaccurate and therefore may have a negative impact on the quality of the listening experience.

Thus, there is a need for a way to verify that the DIALNORM value in an AC-3 bitstream has been set correctly by a content creator and has not been changed during distribution and transmission. Preferably, such verification should not alter the standard syntax of the AC-3 bitstream so that the bitstream remains compatible with existing AC-3 decoders (*i.e.,* backward compatibility is preserved).

The reference Tim Carroll: "Audio Metadata: You can get there from here", 11 October 2004, pages 1-4, URL:http:/tvtechnology.com/features/audio_notes/f-TC-metadata-08.21.02.shtml, discusses an aspect of audio accompanying a video signal in a United States television system. In such a system, audio is distributed from an originating location and time to a television station, where, irrespective of its format (e.g., monophonic, stereophonic, 5.1 channels, etc.), in the U.S., it must encoded with Dolby AC-3 to accompany video signals for transmission. The reference points out that distribution can be in the form of audio coded with a different Dolby coding system, Dolby E, that permits transmission of metadata along with the audio, and that Dolby E metadata, referred to as "a valid metadata stream", may be entered into the Dolby AC-3 encoder to avoid manual entry or reliance on default values.

### Description of the Drawings

FIG. 1 is a functional schematic block diagram of an arrangement for generating a bitstream according to aspects of the present invention.
FIG. 2 is an abstract representation of an example of a formal for metadata verification data in a bitstream.
FIG. 3 is in the nature of a decisional flowchart showing details of a decision step in the flowchart of FIG. 4
FIG. 4 is in the nature of a decisional flowchart useful in understanding aspects of the invention relating to assuring that a bitstream has correct metadata and matching metadata verification data.
FIG. 5 is a functional schematic block diagram of an arrangement for practicing various subsets of steps 404 through 413 of FIG. 4.
FIG. 6a is a functional schematic block diagram showing an arrangement for practicing the subset of steps 408 through 410 of FIG. 4.
FIG. 6b is a functional schematic block diagram showing an arrangement for practicing the subset of steps 408 and 411 through 413 of FIG. 4.
FIG. 7 is a functional schematic block diagram showing an arrangement for practicing the Repack Bitstream function or device of FIG. 6a.
FIG. 8 is in the nature of a decisional flowchart useful in understanding aspects of the invention relating to verification-data-aware decoding.
FIG. 9a is a schematic diagram illustrating a frame of an AC-3 serial coded bitstream. It is not to scale.
FIG. 9b is a schematic diagram illustrating in greater detail the SI portion of an AC-3 serial coded bitstream. It is not to scale.
FIG. 9c is a schematic diagram illustrating in greater detail the bitstream header information (BSI) portion of an AC-3 serial coded bitstream. It is not to scale.
FIG. 9d is a schematic diagram illustrating in greater detail an audio block portion of an AC-3 serial coded bitstream. It is not to scale.
FIG. 9e is a functional schematic block diagram of an AC-3 encoder or encoding function.
FIG. 10a is a hypothetical graph showing the DIALNORM level and dynamic range of three exemplary audio items.
FIG. 10b is a hypothetical graph showing the DIALNORM level and dynamic range of three exemplary audio items during playback.

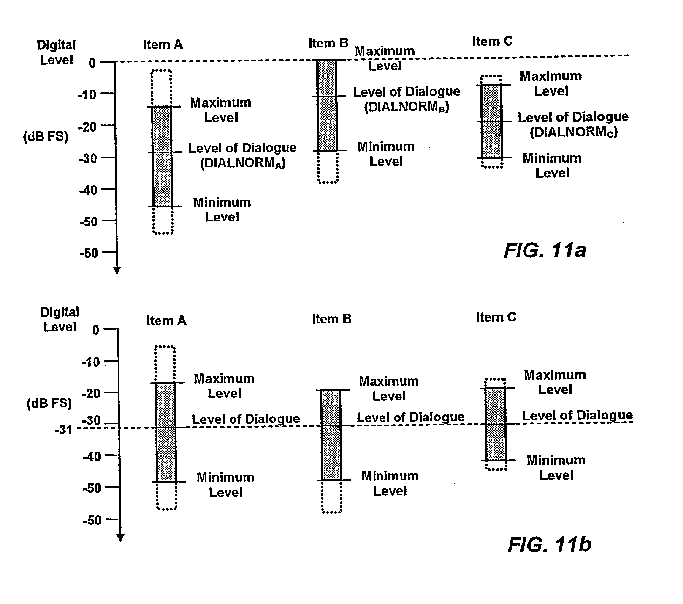

FIG. 11a is a hypothetical graph showing the effect of dynamic range control parameters on three exemplary audio items.
FIG. 11b is a hypothetical graph showing the effect of DIALNORM and dynamic range control parameters on three exemplary audio items during playback.

### Disclosure of the Invention

The invention may be viewed as having at a number of aspects, all of which involve audio metadata verification information. Ones of those aspects include the following:
(1) an encoded audio bitstream having correct metadata and information that verifies the correctness of at least a part of the metadata
(2) a process or device that generates an encoded audio bitstream having correct metadata and information that verifies the correctness of at least a part of the metadata;
(3) a process or device that assures that an encoded audio bitstream has correct metadata and also contains information that verifies the correctness of at least part of the correct metadata; and
(4) a process or device that decodes an encoded audio bitstream whether or not all of its metadata is correct, generates and substitutes corrected metadata, and takes into account, if present, information that verifies the correctness of at least part of the metadata.

Other aspects of the invention are set forth in the claims and in the written description and drawings.

It should be noted that the audio metadata verification information does not serve the function of providing bit error detection and/or correction. Bitstreams in which the verification information is carried typically have some sort of bit error detection and/or correction, for example the CRC code words in an AC-3 bitstream. In aspects of the present invention, the metadata may be incorrect because, for example, it initially was not set correctly or, even if initially set correctly, it has changed during transmission or storage as a result of human intervention or otherwise, not because of bit errors in transmission or storage. Indeed, the audio metadata verification information would not serve the purpose of bit error detection or correction because it serves the purpose of changing metadata, if it is not correct, to a correct value. Bit error correction would merely correct bit errors in the metadata, leaving it incorrect, albeit without bit errors. In other words, the audio metadata verification information relates to the correctness of information underlying bits representing metadata, not to the correctness of the bits themselves.

Although in examples of aspects of the invention described herein, the encoded audio bitstream is a Dolby Digital (AC-3) encoded bitstream, the sets of metadata are the DIALNORM and related dynamic range control metadata, and the verification information corresponds to correct DIALNORM metadata, aspects of the invention are applicable to other audio coding systems and to other metadata in bitstreams of such coding systems. Other audio coding systems in which aspects of the invention may be useful include, for example, the Dolby E system and the MPEG-4 AAC system. With respect to Dolby Digital, the metadata may be the downmixing metadata in addition to or instead of the DIALNORM and related dynamic range control metadata (in which case the verification information also relates to or relates instead to the downmixing metadata).

The verification information may be carried in the encoded audio bitstream in such a way that the bitstream is backwards compatible with existing or legacy processes and devices. In examples of aspects of the invention described herein, the verification information is carried in the AC-3 waste bits, mentioned above, that otherwise may carry no useful information and usually are ignored by standard AC-3 decoders. Other audio coding systems may have "waste" bits or similar bits that may be available (sometimes referred to as "null" bits, "fill" bits or the like) and that usually are ignored by standard decoders - for example, the additional data fields such as the Data Stream Element in MPEG-4 AAC, a user defined data section. However, such bits in some coding systems may not be destroyed by an encode/decode operation, which is a useful feature of aspects of the present invention when embodied in an AC-3 coding system. Techniques for carrying data in "waste" or similar bits in encoded bitstreams are disclosed in U.S. Patent 6,807,528 Bl, "Adding Data to a Compressed Data Frame," by Truman, *et al*.

The verification information may also be carried in the encoded audio bitstream in such a way that it is "hidden." For example, the verification information carried in waste bits may be encrypted. Hiding the verification data has the advantage that someone who purposely changes a DIALNORM value in an encoded bitstream will have difficulty in changing, or will not be able to change, the verification information.

Although not every AC-3 frame may have sufficient unused data bits to convey additional information, this is not a problem when the DIALNORM value is constant over an entire program - it is sufficient that at least some AC-3 frames have sufficient unused data bits to use for the verification data.

Alternatively, instead of carrying the verification information in waste bits that may be encoded, it may be steganographically encoded into the bitstream using techniques such as those described in United States Patent Application S.N. 10/344,388, filed (PCT) August 15,2001, entitled "Modulating One or More Parameters of an Audio or Video Perceptual Coding System in Response to Supplemental Information," by Watson et al., published February 5, 2004 as US 2004/0024588 A1. Steganographic encoding has the advantage that it preserves backward compatibility and also hides the data. However, decoding and re-encoding the bitstream may not erase or "clear" the verification information (as discussed further below), which is a disadvantage.

The verification data, in its simplest form, may be a copy of the correct DIALNORM value (along with appropriate framing or synchronization and identification data). Because the unused bits in an AC-3 bitstream are typically set to null or random values, the likelihood of the unused data bits in an AC-3 bitstream matching the DIALNORM verification data format is highly unlikely. Also, when only one constant DIALNORM value is used per encoded AC-3 program, as is typical, the DIALNORM verification information contained in the unused data bits is also a constant, fixed value. In that case, checking for multiple instances of DIALNORM verification data in a series of AC-3 frames decreases the likelihood that unused data bits are mistaken for verification data bits.

If the DIALNORM measurement, metadata generation, and verification data insertion is performed in real-time, continuously, on an AC-3 bitstream, a constant DIALNORM value across the entire program may not occur. In that case, verification may be performed by analyzing a series of AC-3 frames (that may contain various DIALNORM metadata values) and checking that the DIALNORM verification fields placed in the unused data bits, when they are available, match the DIALNORM values. A minimum number of matching DIALNORM and DIALNORM verification data fields may be required in order to reduce the probability that random data in the unused data fields match the DIALNORM parameter values.

A further aspect of this invention is preferably to allow only approved processes or devices to write the DIALNORM verification data into an AC-3 bitstream. Doing so assures the validity of the verification data. Thus, although the correctness of the DIALNORM metadata parameter value is not guaranteed to be correct for reasons such as those mentioned above, the DIANORM verification data can be used with confidence in its accuracy. Furthermore, the problem of a correct DIALNORM parameter becoming corrupted is overcome because the DIALNORM verification data is placed in otherwise unused data bits of an AC-3 bitstream. If an AC-3 bitstream containing valid verification data is decoded and re-encoded, then it is highly unlikely that the resulting unused data bits that replace DIALNORM verification data as a result of the re-encoding will remain correct, even if the same AC-3 DIALNORM metadata values are used. This ensures that any additional processing of a verified AC-3 bitstream "clears" the verification data (unless an approved AC-3 encoder with loudness measurement and verification capabilities is used for the reprocessing, as explained below).

These and other aspects of the invention will be better understood as the following modes for carrying out the invention are read and understood.

### Best Mode for Carrying out the Invention

### Generating an AC-3 bitstream that has correct DIALNORM and matching verification data

This aspect of the invention relates to creating an AC-3 bitstream that has a correct DIALNORM parameter value and that has matching DIALNORM verification data.

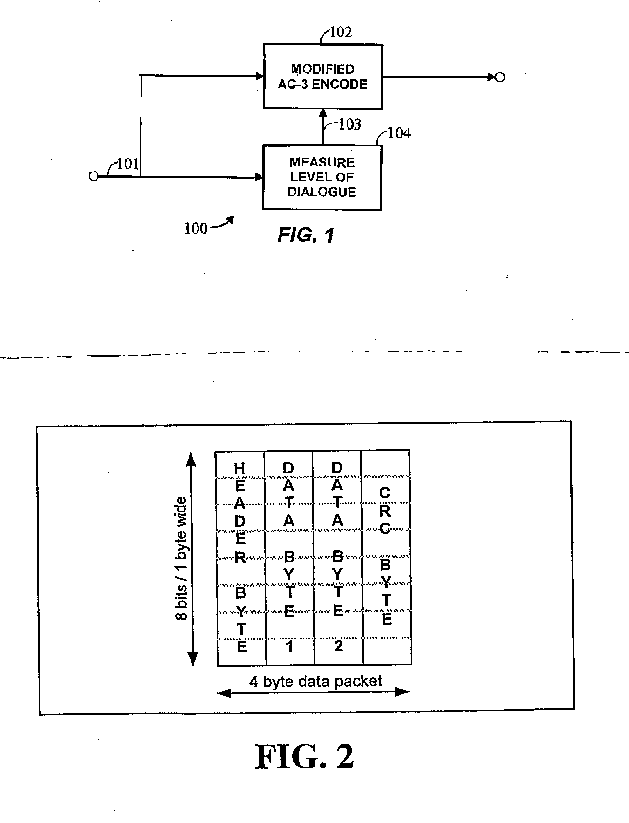

FIG. 1 shows an arrangement 100 comprising two elements - a modified AC-3 encoding function or a modified AC-3 encoder ("Modified AC-3 Encode") 102 and a dialogue level measuring function or dialogue level measurer ("Measure Level of Dialogue") 104. PCM audio 101 is applied to both the Modified AC-3 Encode 102 and the Measure Level of Dialogue 104. The Modified AC-3 Encode may be the same as a standard AC-3 encoder or encoding function except that it is also capable of accepting DIALNORM verification data and inserting it in the AC-3 bitstream in some suitable way, as discussed above. The Modified AC-3 Encode provides a backwards-compatible AC-3 bitstream output that includes DIALNORM verification data. The Measure Level of Dialogue 104 analyzes the input PCM, computes the correct DIALNORM value, and sends it (via 103) to the Modified AC-3 Encode 102.

In normal AC-3 encoding, the number of available unused bits is directly related to the complexity of the audio (*i*.*e*., how difficult the audio is to encode at a desired bitrate). Because the number of bits available per AC-3 audio frame is fixed, the more difficult the audio is to code, the more bits that are used to achieve a level of quality and therefore the fewer bits that are unused in the coding process and available for carrying DIALNORM verification data. Audio signals that are simpler to code will therefore have more unused data bits available for storing the DIALNORM verification data. Therefore, an optional, but useful, modification to the Modified AC-3 encoder is the capability to specify a minimum number of data bits that the encoding process will not use during encoding. Given the small number of bits required to convey the DIALNORM verification data (as described below), purposely retaining some unused data bits may have little or no impact on the quality of the coded audio signal.

### Measure Level Of Dialogue 104

A measure of the loudness level of the dialogue may be performed by first isolating segments of the audio content that predominantly contain speech. Such a method is described in United States Patent Application S.N. 10/233,073, of Vinton, et. al*.,* entitled "Controlling Loudness of Speech in Signals That Contain Speech and Other Types of Audio Information," published March 4, as US2004/0044525 A1. However, other methods may be used. The audio segments that predominantly are speech are then passed to a loudness measurement algorithm. In AC-3, this algorithm is a standard A-weighted power measure. Other loudness measures may also be used including standard B- or C-weighted power measures, or those based on psychoacoustic models of loudness. The power measure is calculated relative to an audio digital full-scale sine wave (0 dB FS).

The isolation of speech segments is not essential; however, it improves the accuracy of the measure and provides more satisfactory results from a listener's perspective. Because not all audio content contains speech, the loudness measure of the whole audio content may provide a sufficient approximation of the dialogue level of the audio, had speech been present.

If the method is operating on a continuous bitstream, rather than a finite length bitstream, this measurement may be continuously updated and may represent the level of the dialogue, for example, for only the last few seconds. If the method is operating on a pre-stored, finite length bitstream (such as an audio file stored on a hard disk), then the entire program may be analyzed and a single DIALNORM value computed.

### Modified AC-3 Encode 102

The input audio PCM is encoded using modified AC-3 encoding that uses the computed DIALNORM value(s) to set the bitstream DIALNORM and related dynamic range compression metadata parameters. The Modified AC-3 encoding may be the same as normal AC-3 encoding except that an additional loudness measurement function or device 104, as described above, explicitly and correctly measures the DIALNORM parameter value and provides it to the encoder for inclusion into the bitstream. The modified encoder also creates and inserts DIALNORM verification data in the otherwise unused data bits of the AC-3 because, in this example, an approved DIALNORM measurement process has provided an objective measurement. The AC-3 bitstream produced by Modified AC-3 Encode 102 preferably conforms to the standards of an AC-3 bitstream defined in the above-cited A/52A document, making it backwards compatible with existing AC-3 decoders.

If the Modified AC-3 Encode also has the capability to specify a minimum number of unused data bits, this can be implemented by changing the value of the total number of bits per AC-3 frame available for audio coding. For example, if the number of bits available to the AC-3 encoding process is normally N_TOTAL_ENCODE_BITS and it is desired to have at least N_TOTAL_VERIFICATION_BITS, then the new total number of available encoding bits will be (N_TOTAL_ENCODE_BITS - N_TOTAL_VERIFICATION_BITS) and the audio coding process proceeds as usual.

### Format of DIALNORM verification data

In order for the DIALNORM verification data to be identified easily and read from an AC-3 bitstream without decoding, it is useful for the data to have a pre-defined format. FIG. 2 outlines a suitable format for storing the DIALNORM verification data in a byte-aligned way that simplifies locating and reading the data from an undecoded AC-3 bitstream (either in a real-time AC-3 bitstream or an AC-3 bitstream that is stored as a digital file). The format is not critical and other formats may be usable. As shown in FIG. 2, the example format for DIALNORM verification data consists of several consecutive bytes. The first byte is a predefined DIALNORM verification header byte. This header byte may take any value, however a non-zero value (similar, but not the same as the AC-3 SYNCWORD) is preferred because the unused data bits may have been initialized to zero values in other AC-3 bitstreams. Following the DIALNORM verification header in this example, data bytes are used to convey DIALNORM verification and additional optional data. Because the standard AC-3 DIALNORM value is comprised of five bits, one data byte provides three additional data bits and two data bytes provides 11 additional data bits. The use of two DIALNORM verification data bytes is shown in the example of FIG. 2. These bytes may be used to store information such as the type or version of loudness algorithm used or other information. The final byte shown in FIG. 2 is a Cycle Redundancy Check (CRC) data byte that is computed using the DIALNORM verification header and data bytes. This byte is useful in that it greatly reduces the probability of the unused data bits in an AC-3 bitstream (containing a sequence of bytes that have a valid DIALNORM verification header byte, two intermediate data bytes and a CRC byte) passing a CRC check for all four bytes.

As discussed previously, if a modified AC-3 encoder reserves sufficient unused data bits to contain the DIALNORM verification data, given the structure outlined in FIG. 2, this requires only four bytes or 32 bits for each 1792 byte AC-3 data frame, which corresponds to only 0.2% of the total data.

### Assuring that an AC-3 bitstream has correct DIALNORM and matching verification data

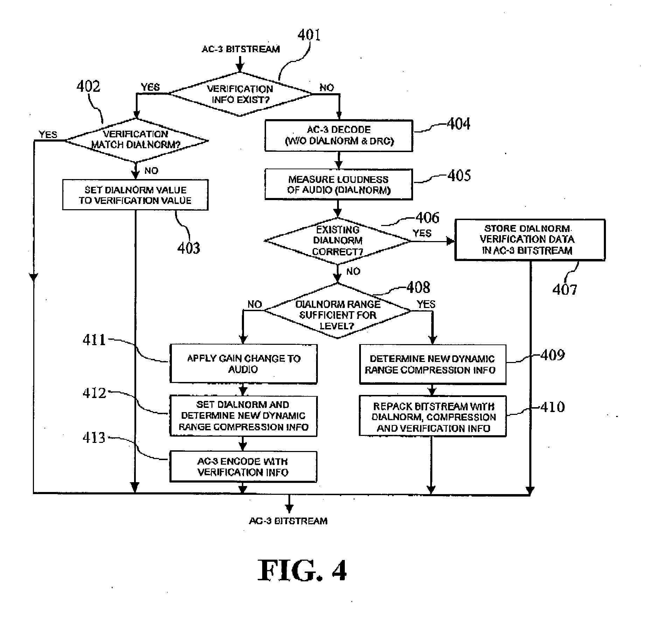

Another aspect of the invention is assuring that the DIALNORM value in an AC-3 bitstream is correct and that the bitstream has matching DIALNORM verification information. This aspect of the invention is set forth in the exemplary flowchart of FIG. 4. As explained below, either all of the FIG. 4 process or subsets of the FIG. 4 process may be employed. Such processes or devices employing steps of the processes may be useful, for example, in the transmission or storage of a bitstream, subsequent to the creation of a bitstream by a content creator and prior to a final decoding of the bitstream for a listener. It will be understood that the steps of FIG. 4 or subsets thereof may represent portions of one or more processes or may be functions performed in one or more devices.

The steps of FIG. 4 may be performed on a bitstream that represents the audio of a finite length audio item. For example, an audio item consisting of a television program or advertisements that is stored in digital form on a file server or otherwise. As used herein, an "audio item" is a continuous piece of audio information; for example, a 30 second television advertisement or an entire movie (motion picture). However, the steps of FIG. 4 may also be used to measure and update a continuous, real-time bitstream of AC-3 frames, for example a continuous AC-3 bitstream representing the audio of a television station or channel.

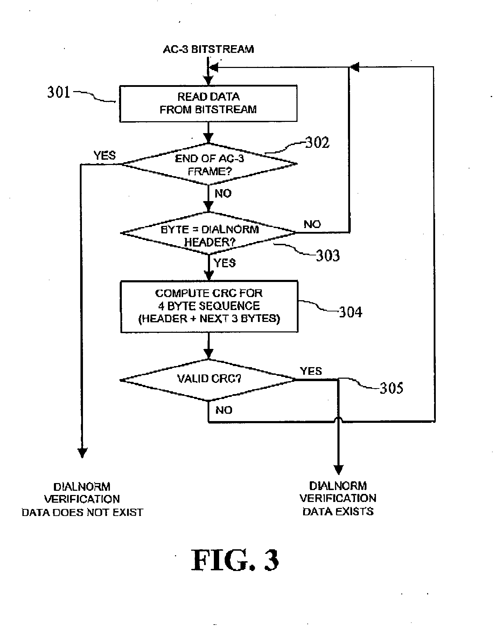

### Test for Existence of DIALNORM Verification Data (Step 401 of FIG. 4 and FIG.3)

As shown in FIG. 4, the first step performed (step 401) is to determine whether AC-3 DIALNORM verification data exists in an encoded AC-3 bitstream. FIG. 3 shows an exemplary flowchart for performing such a check. As shown in FIG. 3, the input is an AC-3 audio bitstream, which can be processed on a frame-by-frame basis. Because the location of unused data bits within an AC-3 frame is known, it is not necessary to perform an exhaustive search of an entire frame or bitstream - the search may begin at the start of the unused bits section or sections. Although the DIALNORM verification data consists of consecutive bytes of data, this data may or may not be byte aligned with other AC-3 frame data. Therefore, the first step (step 301) in the process in FIG. 3, "READ DATA FROM BITSTREAM," may require reading the data bit-by-bit and constructing consecutive bytes of data from each bit read.

In step 303 of the example of FIG. 3, each byte of data read from the AC-3 frame is compared to the pre-defined DIALNORM verification header byte. If a byte does not match, more data is read and another byte comparison is performed. If the byte value matches the header value, then the consecutive bytes of data following the matching byte are read. If the byte matching the verification header byte is near the end of the AC-3 frame, as determined in step 302, and three bytes of following data are not available, the search for data is aborted. The four bytes (including the matching verification header byte as outlined in FIG. 2) are used to compute a CRC check in step 304. If the CRC check passes (step 305), then the DIALNORM verification data exists and the DIALNORM verification information may be retrieved from the data bytes as described further below.

### Test Whether DIALNORM Verification Data Matches AC-3 Dialnorm Data (402)

As shown in step 401 of FIG. 4, when DIALNORM verification data exists (YES output of step 401), the next step, step 402, is to determine whether the verification data matches the AC-3 DIALNORM value. As shown in FIG. 9, as discussed further below, the location and format of the normal DIALNORM data is known and can be read easily from the AC-3 bitstream. The test to determine whether the normal DIALNORM and verification DIALNORM values match is a simple numeric comparison. If the values match, then the normal DIALNORM value is correct and no further analysis or processing is required. The values may be considered to "match" sufficiently if the absolute value of a difference between the two values is less than a threshold. If desired, this threshold may be set equal to zero, but in preferred implementations a threshold is chosen to balance a tradeoff between the accuracy of the metadata parameters, the cost of the computational resources needed to implement the present invention, and the possibility that the difference between the DIALNORM value and the verification value would degrade the quality of the audio information during playback. A threshold value of three (3 dB) may be suitable for many applications. The AC-3 bitstream output may be stored, transmitted or decoded.

### Correcting Normal AC-3 DIALNORM Data

### with DIALNORM Verification Data (Step 403)

When the DIALNORM verification data is extracted from the AC-3 bitstream and does not match the normal AC-3 DIALNORM metadata (NO output of step 402), then the DIALNORM metadata is updated with *(i.e.,* it is set to or made the same as) the verification DIALNORM value (403). Because the normal DIALNORM value has been determined to be incorrect and should be updated, it is possible that the related AC-3 dynamic range compression metadata is also incorrect. Therefore, the dynamic range compression information should be analyzed and if it is correct, only the DIALNORM metadata parameter is updated. If the dynamic range compression information is incorrect, then it should also be updated. The details of such an analysis and updating are explained further below in connection with steps 409 through 413 of FIG. 4, FIGS. 6a, 6b and 9c).

### Verification Data Not in the AC-3 Bitstream

### DIALNORM Metadata Correct (Steps 404-407)

As shown in the example of FIG. 4, if the DIALNORM verification data is not contained within the AC-3 bitstream (step 401 NO output), then the AC-3 bitstream is decoded to PCM without applying the DIALNORM parameter and the related dynamic range control parameters (because those metadata parameters may be incorrect) so that the decoded audio content is at the same level as that input to the encoder that was used to create the bitstream) (step 404). The loudness of the dialogue is then measured to determine the correct DIALNORM level (step 405). This measurement may be accomplished by the device or function of the Measure Level of Dialogue 104 described above. Following measurement of the level of dialogue in step 405, the measured value is compared to the AC-3 DIALNORM metadata in step 406 (details of such a comparison are given below). As shown following the YES output of step 406, if the normal DIALNORM metadata is correct, then the only action required is to format and store the DIALNORM verification data in the AC-3 bitstream (step 407).

As discussed above, the number of available unused data bits is dependent upon the complexity of the audio and some AC-3 frames may not have sufficient unused data bits to store the DIALNORM verification data in every frame. Two options are possible: store the verification data only in AC-3 frames with sufficient unused data bits (in which case the DIALNORM verification data may be inserted in the original input AC-3 bitstream rather than in an AC-3 bitstream resulting from a re-encoding of the step 404 decoded AC-3 bitstream) or re-encode the audio resulting from the AC-3 decoding of step 404, reserving a sufficient number of unused data bits to insure that verification data fits in each frame.

An alternative to the step 404 AC-3 decoding and the step 405 loudness measuring is to obtain an approximation of the loudness by a technique that does not require a complete decoding of the AC-3 bitstream. Such a technique, which partially decodes a bitstream such as an AC-3 bitstream in order to obtain a coarse estimate of the coded audio spectrum based on the magnitude of subband exponents, is disclosed in a United States Provisional Patent Application of Brett Graham Crockett, Michael John Smithers, Alan Jeffrey Seefeldt, Attorneys' Docket DOL157, filed the same day as the present application.

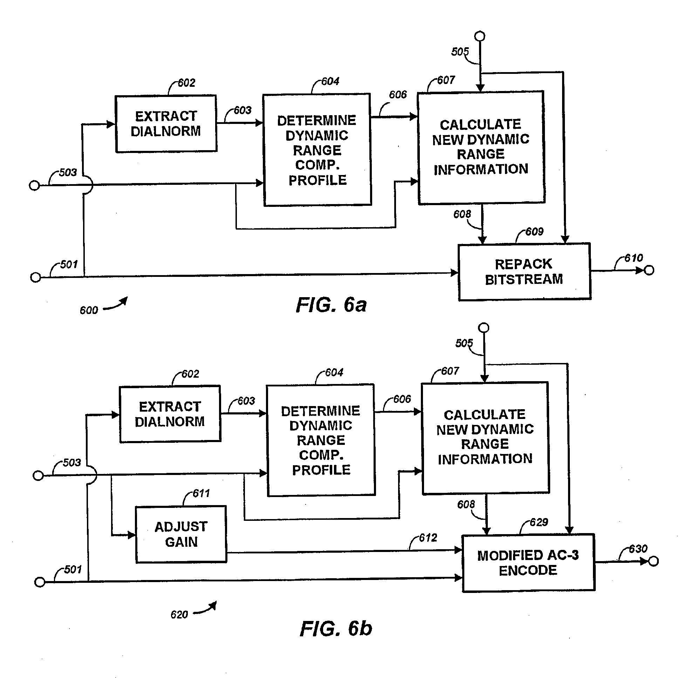

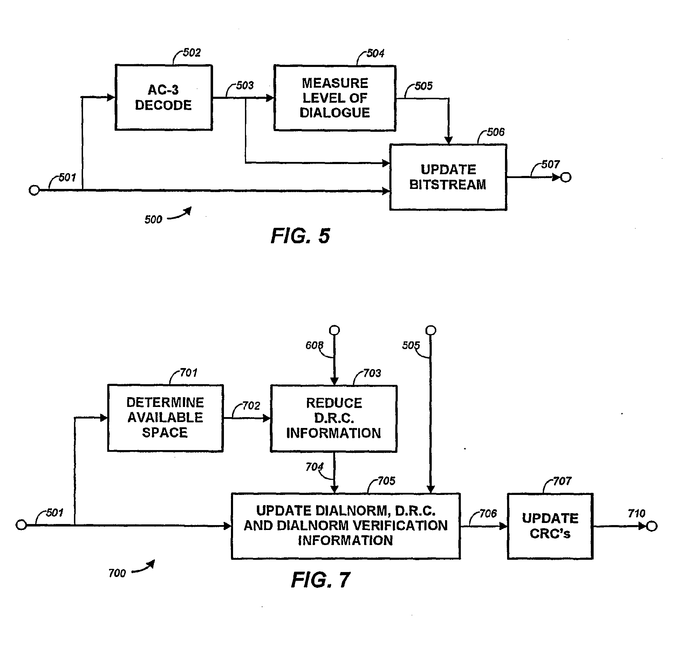

FIG. 5 shows an example of an arrangement 500 for practicing various subsets of steps 404 through 413 of FIG. 4. As shown in FIG. 5, AC-3 frames 501 are decoded by a modified AC-3 decoding function or decoder ("AC-3 Decoder") 502 into digital audio 503. During the decoding of the AC-3 frames by AC-3 Decode 502, the DIALNORM parameter and dynamic range compression information, although recovered for potential other use, as described below, are ignored for the purposes of the audio decoding so that the decoded audio 503is at the same level and has the same dynamic range as the input to the encoder that was used to create the bitstream. A dialogue level measuring function or dialogue level measurer ("Measure Level Of Dialogue") 504 receives the decoded audio 503 and calculates the level of the dialogue 505. The Measure of Dialogue 504 may be the same function or device as the Measure of Dialogue 104, described above in connection with FIG. 1. AC-3 Decoder 502 may perform step 404, as described above, and Measure Level of Dialogue 504 may perform step 405, as described above. A bitstream updating function or updater ("Update Bitstream") 506 compares the level of the dialogue with the DIALNORM parameter present in each frame. Further details of the comparison are given below. In addition, depending on the decisions of step 406 and 408, it also performs either step 407, steps 408-410 (see FIG. 6a and its description below), or steps 408 and 411-413 (see FIG. 6b and its description below). When performing step 407, it inserts DIALNORM verification information into the input AC-3 bitstream, leaving the original DIALNORM and related dynamic range control information. In performing step 407, Update Bitstream 506 also searches the AC-3 frames for unused data bits. AC-3 frames with a sufficient number of unused data bits are modified such that the unused bits are updated to contain the DIALNORM verification data. Alternatively, the decoded audio produced by AC-3 Decode 502 may be re-encoded, reserving a sufficient number of unused data bits to insure that verification data fits in each frame (in which case the Update Bitstream 506 includes a modified AC-3 encoder such as Modified AC-3 Encode 102 of FIG. 1).

More specifically, in performing step 406, the Update Bitstream 506 compares the measured level of the dialog with the level of the dialogue as indicated by the DIALNORM parameter. The DIALNORM parameter has a range of -31 dB to -1 dB inclusive, in 1 dB increments. If the measured level of the dialogue is within that range and is different from the value of DIALNORM from the bitstream, the DIALNORM parameter is conditionally updated with (it is "conditional" upon determining if sufficient unused bits are available to carry the verification information) the measured level, rounded, for example, to the nearest 1 dB. The measured level of the dialogue may be considered to be different from the value of DIALNORM in the bitstream if the absolute value of a difference between the two values is less than a threshold. If desired, this threshold may be set equal to zero, but in preferred implementations a threshold is chosen to balance a tradeoff between the accuracy of the metadata parameters, the cost of the computational resources needed to implement the present invention, and the possibility that the difference between the DIALNORM value and the measured dialogue level would degrade the quality of the audio information during playback. A threshold value of three (3 dB) may be suitable for many applications. In addition to updating the bitstream to contain the correct DIALNORM parameter, Update Bitstream 506 also searches for unused data bits in each AC-3 frame. If a frame contains a sufficient number of unused data bits, they are replaced with the DIALNORM verification data, indicating that an accurate and approved loudness measurement process has taken place and that the DIALNORM value embedded in the AC-3 bitstream is correct.

### Verification Data Not in the AC-3 Bitstream

### DIALNORM Metadata Incorrect

### Loudness Within DIALNORM Parameter Range (Steps 408-410)

As shown in the example of FIG. 4, if verification information does not exist (NO output of step 401) and the existing AC-3 DIALNORM value is incorrect (NO output of step 406), then it should be determined whether the measured loudness level is within the valid range of the DIALNORM parameter (step 408). The DIALNORM parameter does not have sufficient range to convey the level when the measured level of the dialogue 505 is outside the valid range of the DIALNORM parameter as allowed in the AC-3 bitstream. That is, the measured level is less than -31 dB or greater than -1 dB. If the DIALNORM parameter has sufficient range to convey the level (YES output of step 408), then steps 409 and 410 are performed as follows, further details of which are shown in connection with FIGS. 6a, and 7.

FIG. 6a shows how new dynamic range compression information is determined (step 409) and how the bitstream is updated and repacked (step 410) when the value of DIALNORM is changed and the DIALNORM verification data inserted. As noted above, the example of FIG. 6a is a variation of the Update Bitstream 507 of FIG. 5 that is useful for performing steps 408-410. The elements of FIG. 6a may be described as follows.

### Extract DIALNORM 602

The value of the DIALNORM parameter is extracted from the AC-3 bitstream, as indicated by FIGS. 5 and 6a - the undecoded bitstream 501 is applied to the DIALNORM-extracting device or function 602 ("Extract DIALNORM" 602).

### Determine Dynamic Range Compression Profile 604

As shown in FIG. 6a, a dynamic-range-compression profile-determining device or function ("Determine Dynamic Range Comp. Profile" 604) receives the DIALNORM parameter value extracted from the undecoded bitstream and the output of the AC-3 Decode (502 of FIG. 5) and determines a dynamic-range-compression profile. The dynamic-range-compression metadata in an AC-3 frame represents gain changes that can be applied to the audio content during decoding. That metadata exists as two different parameters. The COMPR parameter in the Bitstream Information (BSI) has a range of -48.14 dB to +47.88 dB and is a scaling that is applied to a whole frame of audio. The DYNRNG parameter, one in each Audio Block (AB), has a range of -24.06 dB to +23.94 dB and provides a means for independently scaling each block. One or neither, but not both, of these parameters is used in the decoder, depending on the decoding mode.

As mentioned above, the COMPR and DYNRNG parameters are calculated during encoding using the DIALNORM parameter and none or one of a number of dynamic range compression profiles. Each profile contains standard audio dynamic range compression parameter information including attack and release time constants, and compression ratios.

Because the DIALNORM parameter is changed, the values of COMPR and DYNRNG in the bitstream may no longer be correct. The COMPR and DYNRNG parameters may be left unaltered in the bitstream but the audio at playback may exhibit severe and annoying gain fluctuations and/or lead to decoder overload (or digital clipping). A better approach is to update the COMPR and DYNRNG parameters. This is best accomplished with knowledge of the dynamic range compression profile used to calculate their original values. Because information about the profile is not present in the bitstream, an arbitrary profile may be chosen (including disabling dynamic range compression all together), or the profile may be inferred from the original COMPR and DYNRNG values in the bitstream. Inferring the profile may more closely match the content creator's original intent with regard to dynamic range compression.

In Determine Dynamic Range Compression Profile 604, the decoded audio 503 and the original DIALNORM value 603 are used together to calculate multiple sets of COMPR and DYNRNG values - one set for each profile that is known to exist in AC-3 encoders. The index number of the profile whose set of COMPR and DYNRNG values most closely match the COMPR and DYNRNG values in the original bitstream is output as 606.

If this method is operating on a continuous stream of frames, the profile index may be continuously updated. For example, it may represent the most likely profile for several previous seconds of frames.

It is possible that the estimated dynamic range compression profile is not the same as the profile originally used. Therefore it may be desirable to update the DIALNORM and dynamic range compression information only if the absolute difference between the measured level of the dialogue and the DIALNORM value is greater than a threshold, as mentioned above.

### Calculate New Dynamic Range Information 607

A function or device ("Calculate New Dynamic Range Information") 607 calculates new dynamic range information. The measure of the true level of the dialogue 505 (FIG. 5) is rounded and becomes the new DIALNORM value. A rounding to the nearest 1 dB has been found usable, although this is not critical. Using the profile index 606, the decoded audio 503 (without the old DIALNORM and dynamic range compression applied to it), and the new DIALNORM value (rounded 505), a new set of COMPR and DYNRNG values 608 are calculated.

### Repack Bitstream 609

A bitstream repacker or repacking function ("Repack Bitstream") 609 receives the undecoded AC-3 bitstream 501, the COMPR and DYNRNG values 608 and the measured dialog level 505. As above, the measure of the true level of the dialogue 505 is rounded, for example to the nearest 1 dB, although this is not critical, and becomes the new DIALNORM value. The new DIALNORM value and the new COMPR and DYNRNG values are updated in the undecoded AC-3 bitstream 501. Additionally, if sufficient unused data bits exist, as determined in the Repack Bitstream 609, then the DIALNORM verification data is used to replace some or all of the unused data bits. The new updated AC-3 bitstream is output as a new bitstream 610.

Details of Repack Bitstream 609 are set forth in the example of FIG. 7, which may be described as follows.

### Determine Available Space 701

A function or device ("Determine Available Space") 701 identifies all unused data bits that can be used for updating the COMPR and DYNRNG values and for including the new DIALNORM verification data. Both the COMPR and DYNRNG parameters each require 8 bits in the AC-3 bitstream. Each occurrence of these parameters has a conditional "exists" flag. The COMPR parameter has a COMPRE flag that, if set to 1, indicates that a COMPR parameter follows in the bitstream. Similarly, each DYNRNG parameter has a DYNRNGE flag that, if set to 1, indicates that a DYNRNG parameter follows in the bitstream. If the DYNRNGE flag in the first block of a frame is set to 0, then the decoder assumes an initial DYNRNG value of 0 dB. If the DYNRNGE flag in any of blocks 1 to 5 in a frame is set to 0, then the decoder reuses the DYNRNG value from the previous block. This conditional presence of COMPR and DYNRNG parameters in each frame means that the total number of bits used by COMPR and DYNRNG may vary.

Because the total number of bits required for the new COMPR and DYNRNG values may be greater than the total number of bits used by the old COMPR and DYNRNG values (because the existence and values of COMPR and DYNRNG are dependent upon the value of DIALNORM), it is necessary to determine if there are any unused bits in the frame. These unused bits can be used for the new DIALNORM verification data as well as to move information within the AC-3 frame to make room for the additional bits required by the new COMPR and DYNRG values.

### Reduce Dynamic Range Compression Information 703

A function or device ("Reduce D.R.C. Information") 703 receives the identification of unused data bits 702 and calculates new dynamic range information 608 in order to reduce the number of bits required by new COMPR and DYNRNG values if the total number of bits for these values is more that the sum of the unused bits plus the total number of bits used by the old COMPR and DYNRNG value. The output of function or device 703 is the new COMPR and DYNRNG values, as may have been adjusted in view of such bit requirements.

There is a constraint that exists for each AC-3 frame. FIG. 9a shows two frame boundaries, the 5/8^{th}'s frame boundary and the boundary between Audio Block 1 and Audio Block 2 (AB1-AB2). The constraint is that when a frame is encoded, the AB1-AB2 boundary cannot be further into the bitstream than the 5/8^{th}'s frame boundary. If the number of bits required for the new DYNRNG values in Audio Blocks 0 and 1 is greater than the sum of the unused Skip Data bits in Audio Blocks 0 and 1 plus the number of bits used by the old DYNRNG values in Audio Blocks 0 and 1, then it follows that making room for the additional bits may push the AB1-AB2 boundary beyond the 5/8^{th}'s frame boundary. If this occurs, then the number of bits required by the new DYNRNG values in blocks 0 and 1 should be reduced. This can be performed in a variety of ways.

A suitable method is first to analyze the new DYNRNG values and DYNRNGE flags for Audio Blocks 0 and 1. If only the new DYNRNGE flag in block 0 is set to 1, then this flag is set to 0 and the new DYNRNG value of block 0 and block 1 are set equal to zero. If only the new DYNRNGE flag in block 1 is set to 1, then the flag is set to 0 and the new DYNRNG value of block 1 is set equal to that of block 0. If the new DYNRNGE flags in blocks 0 and 1 are set to 1, then two comparisons are performed. If the absolute difference between the new value of DYNRNG for block 0 and 0 dB is less than the absolute difference between the new values of DYNRNG for blocks 0 and 1, then the new DYNRNGE flag for block 0 is set to 0 and the new value of DYNRNG for block 0 is set to 0. Otherwise, the new DYNRNGE flag for block 1 is set to 0 and the new DYNRNG values for blocks 0 and 1 are set to the minimum value of DYNRNG from block 0 and 1. This reduces the number of bits required for the new DYNRNG words by 8 bits. If one of the block 0 or 1 DYNRNGE flags is set to 1 and further bit reduction is required, then the process above is repeated. After any bit reduction is completed, the new DYNRNG value for block 1 is compared to the new DYNRNG value for block 2. If these values are equal, the new DYNRNGE flag for block 2 is set to 0. If the new DYNRNG values are not equal, the new DYNRNGE flag for block 2 is set to 1.

Looking at the whole frame of six blocks; if the total number of bits required for the new COMPR and DYNRNG values is more that the sum of the unused bits plus the total number of bits used by the old COMPR and DYNRNG values, then it is necessary to reduce the number of bits required by the new parameters. This can be performed in a variety of ways.

A suitable method is to look at the new DYNRNG values and DYNRNGE flags across the six Audio Blocks in a frame and group the blocks into regions where each region represents a block with a DYNRNGE flag set to 1, or the first block if the block 0 DYNRNGE flag is set to 0, plus any following blocks with DYNRNGE flags set to 0. It follows that the number of regions could be as low as 1, where either all blocks have no DYNRNGE flag set to 1 or the first block only has an exists flag set to 1, or the number of regions could be as high as high as six, where every block has a DYNRNGE flag set to 1. The value of DYNRNG for each region is compared with the value of DYNRNG in each adjacent region. The adjacent pair of regions with the closest values of DYNRNG are then combined into one region by firstly setting the DYNRNG values in both regions to the minimum value of either region and secondly setting the DYNRNGE flag of the second region to 0. This reduces the total number of bits required by the new COMPR and DYNRNG information by 8 bits. This process is repeated until the total number of bits required for the new COMPR and DYNRNG values is less than or equal to the sum of the unused bits plus the total number of bits required by the old COMPR and DYNRNG values.

As indicated above, it is possible for all of the unused data bits in an AC-3 frame to be used for the updated DYNRNG and COMPR parameters, thereby leaving no unused bits for the DIALNORM verification data. As discussed previously, this is expected and does not reduce that usefulness of inserting the DIALNORM verification data in those frames where sufficient unused data bits exist.

### Update DIALNORM, Dynamic Range Compression

### and DIALNORM Verification Information 705

A device or function ("Update DIALNORM, D.R.C. and DIALNORM Verification Information") 705 receives the undecoded AC-3 bitstream 501, the new COMPR and DYNRNG values 704, as may have been adjusted in view of bit requirements, and the measured dialog level 505, and updates the bitstream's DIALNORM parameter, dynamic range parameters, and inserts DIALNORM verification information in the bitstream.

Because a frame always has a DIALNORM parameter, the new DIALNORM value can be written into its predetermined location in the BSI. However, updating the COMPR and DYNRNG parameters involves possibly moving parts of the AC-3 frame around to make room for the new values. If the total number of bits required for the new COMPR and DYNRNG values is greater than the total number of bits used by the old values, the lengths of some of the SKIPD fields and possibly the waste bits (W) needs to be reduced. However, if the total number of new bits required is less, then the length of the waste bits (W) is increased. If a sufficient number of unused data bits exist following these parameter updates, then the DIALNORM verification data is placed in the unused data bit locations.

To update the COMPR parameter, if the old COMPR flag is set to 1, the old COMPR value can be overwritten with the new COMPR value. However, if the old COMPR flag is set to 0 and the newly computed COMPR value is set to 1, all the binary data following the COMPR parameter should be shifted by 8 bits to make room for the new COMPR value. The COMPR flag in the frame is then set to 1 and the new COMPR value is written into the newly created 8 bits of space. If the old COMPR flag is set to 1 and the new COMPR flag is set to 0, then the COMPR in the frame is set to 0 and all the binary data following the COMPR parameter should be shifted by 8 bits, because the COMPR parameter no longer exists in the frame.

To update the DYNRNG parameters in each Audio Block, if the old DYNRNG flag is set to 1, the old DYNRNG value can be overwritten with the new DYNRNG value. However, if the old DYNRNG flag is set to 0 and the new DYNRNG flag is set to 1, all the binary data following the DYNRNG parameter should be shifted to make room for the new DYNRNG value. The DYNRNG flag in the frame is then set to 1 and the new DYNRNG value can be written into the newly-created 8 bits of space. If the old DYNRNG flag is set to 1 and the new DYNRNG flag is set to 0, the DYNRNG flag in the frame is set to 0 and all the binary data following the DYNRNG parameter should be shifted by 8 bits, because the DYNRNG parameter no longer exists in the bitstream.

The SKIPL parameter indicates the length of the SKIPD field in bytes. To reduce the length of the SKIPD field, the binary data to the right of the SKIPD field should be shifted by a multiple of 8 bits. The SKIPL parameter is then updated to reflect the new length of the SKIPD field. Occasionally, a SKIPD field may contain optional information that is not officially defined in the AC3 standard (see, for example, the A52/A document, cited above). If the first bit in the SKIPD field is equal to 1, then information bearing data follows in the SKIPD field, otherwise the bits in the SKIPD field are all set to 0. If information is present and the SKIPD field needs to be shortened, then it can only be shorted up to this information. This allows the information to be maintained within in the AC-3 frame.

Following the modification and updating of the unused data bits, the DIALNORM verification data can be inserted into the unused bits. As discussed previously, this data can take several forms, including a duplication of the frames DIALNORM parameter with sufficient synchronization and identification data information. This allows a DIALNORM verification decoder process to search the unused data bits, identify whether DIALNORM verification data exists and compare it to the standard DIALNORM parameter embedded in the AC-3 bitstream.

### Update CRC's 707

The updated AC-3 bitstream, which includes DIALNORM verification information, is applied to an error correction word generating device or function ("Update CRC's") 707. When the data in an AC-3 frame has changed, the two error detection words CRC1 and CRC2 should be recalculated. If only data up to the 5/8^{th} frame boundary has been changed, then only CRC1 need be recalculated. Likewise if only data from the 5/8^{th} frame boundary to the end of the frame has been changed, then only CRC2 need be recalculated.

### Verification Data Not in the AC-3 Bitstream

### DIALNORM Metadata Incorrect DIALNORM Range Insufficient for Conveying Level

As shown in the example of FIG. 4, if verification information does not exist (NO output of step 401) and the existing AC-3 DIALNORM value is incorrect (NO output of step 406), then it should be determined whether the measured loudness level is within the valid range of the DIALNORM (step 408). As mentioned above, the DIALNORM parameter does not have sufficient range to convey the level when the measured level of the dialogue 505 is outside the valid range of the DIALNORM parameter as allowed in the AC-3 bitstream. That is, the measured level is less than -31 dB or greater than -1 dB. In this case the output of step 408 is NO. One way to correct this situation is to update the DIALNORM parameter in the frame with the closest valid value, as described above. However, this may leave some error between the DIALNORM value and the measured level of the dialogue. A suitable alternative that minimizes such error is to perform steps 411, 412 and 413 of FIG. 4, as described as follows with reference to the example of FIG. 6b. As noted above, FIG. 6b is a variation of the Update Bitstream 507 of FIG. 5 that is useful for performing steps 411, 412 and 413. The elements of FIG. 6b that differ from those of FIG. 6a may be described as follows. Elements common to FIGS. 6a and 6b retain the same respective reference numeral.

### Adjust Gain 611

Decoded audio 503 is applied to adjustable gain changer or gain changing function ("Adjust Gain") 611. A suitable gain change may be applied to the audio to reduce error between the measured dialogue level and the DIALNORM value (step 411). For example, if the measured dialogue level is -36 dB, the DIALNORM may be set to the closest valid value, -31 dB, thus boosting the audio by 5 dB, from -36 dB to -31 dB.

### Modified AC-3 Encode 629

The gain-adjusted audio is then re-encoded using modified AC-3 audio encoding applying it, along with the new DIALNORM and dynamic range compression information 608 (step 412), to a modified AC-3 encoder or encoding function ("Modified AC-3 Encode") 629. Modified AC-3 Encode is characterized as "modified" because it is aware of the application of the DIALNORM verification data capabilities and it inserts such data into the unused data bits following the encoding process and prior to final bitstream packing. This re-encoding maintains all of the original BSI (except for DIALNORM, dynamic range compression information, and DIALNORM verification) and AUX metadata from the original bitstream 501 frame, and includes calculating new error detection words.

Other functions and devices of FIG. 6b may be the same as the corresponding functions and devices of FIG. 6a as mentioned above.

Practicing steps 411, 412 and 413 may lead to some loss of sound quality due to the decoding and re-encoding of the audio content. It therefore may be desirable only to re-encode the content if the absolute error between the measured dialogue level and the closest DIALNORM value is greater than a threshold. A threshold value of three (3 dB) may be suitable for many applications.

### Subsets of FIG. 4

As mentioned above, either all of the FIG. 4 process or subsets of the FIG. 4 process or devices employing steps of the processes may be employed.

One useful and inexpensive subset of the FIG. 4 process is to employ steps 401 through 403. If verification information exists in the bitstream (401 is YES), steps 402 and 403 operate as described above either to leave the AC-3 bitstream unchanged or to set the DIALNORM value to the verification value. If no verification information exists in the bitstream (the output 401 is NO), DIALNORM may be left unchanged or set to a default value.

Another useful subset of the FIG. 4 process is to employ steps 401 and 404 through 407. This is useful when there is no verification information and it is desired to add verification information when the existing DIALNORM is correct. If verification information exists in the bitstream (401 is YES), the bitstream may be left unchanged. If verification information does not exist (the output of 401 is NO), steps 404,405 and 406 determine if the existing DIALNORM is correct (the output of 406 is YES) or not (the output of 406 is NO). If the existing DIALNORM is correct, verification information may be added to the bitstream. If the existing DIALNORM is not correct, DIALNORM may be set to a default value.

Another useful, but somewhat more expensive, subset of the FIG. 4 process or devices is to employ steps 401 through 406. Operation is as just described when the verification information exists (the output of 401 is YES), but when the verification information does not exist (the output of 401 is NO), steps 404, 405 and 406 determine if the existing DIALNORM is correct (the output of 406 is YES) or not (the output of 406 is NO). If the existing DIALNORM is correct, the bitstream may be left unchanged. If the existing DIALNORM is not correct, DIALNORM may be set to a default value.

### Verification-Data-Aware Decoding

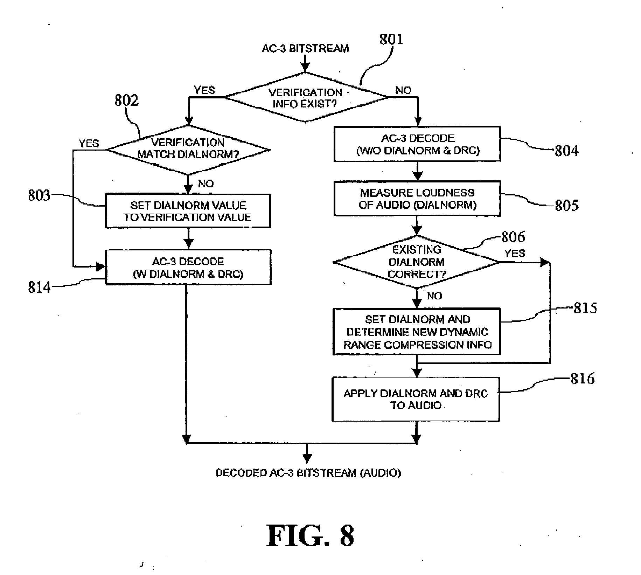

Another aspect of the present invention is properly decoding an AC-3 bitstream whether or not it has correct DIALNORM and matching verification data, but utilizing such verification data when it is present. This may be referred to as "verification-data-aware" decoding. This aspect of the invention is set forth in the exemplary flowchart of FIG. 8. As explained below, either all of the FIG. 8 process or subsets of the FIG. 8 process may be employed. Such a processes or devices employing steps of the processes may be useful, for example, in the decoding of a bitstream. Steps in FIG.8 that generally correspond to steps in FIG. 4 employ corresponding reference numerals (*e*.*g*., "801" and "401"). It will be understood that the steps of FIG. 8 or subsets thereof may represent portions of one or more processes or may be functions performed in one or more devices

### Test for Existence of DIALNORM Verification Data (Step 801)

As shown in FIG. 8, the first step performed (step 801) is to determine whether AC-3 DIALNORM verification data exists in the AC-3 bitstream. This step may be performed in the same manner as step 401 of FIG. 4, described above (including the details thereof shown in FIG. 3).

### Test Whether DIALNORM Verification Data Matches AC-3 DIALNORM Data (802)

As shown in step 801 of FIG. 8, when DIALNORM verification data exists (YES output of step 801), the next step, step 802, is to determine whether the verification data matches the AC-3 DIALNORM value. This step may be performed in the same manner as step 402 of FIG. 4, described above. If the values match, then the normal DIALNORM value is correct and the AC-3 bitstream applied to the process (input of step 801) may be decoded using its existing DIALNORM and related dynamic range metadata as indicated in step 814, thus providing a decoded AC-3 audio bitstream. Whether or not the values "match" may be determined by whether they are within a threshold, as explained above in connection with the description of step 402.

### Correcting Normal AC-3 DIALNORM Data with DIALNORM Verification Data (803)

When the DIALNORM verification data is extracted from the AC-3 bitstream and does not match the normal AC-3 DIALNORM metadata (NO output of step 802), then the DIALNORM metadata is updated with the verification DIALNORM value (803). Because the normal DIALNORM value has been determined to be incorrect and should be updated, it is possible that the related AC-3 dynamic range compression metadata is also incorrect. Therefore, the dynamic range compression information should be analyzed and if it is correct, only the DIALNORM metadata parameter is updated. If the dynamic range compression information is incorrect, then it should also be updated. The details of such analysis and updating are explained herein in connection with steps 409 through 413 of FIGS. 4 and 6b).

### Verification Data Not in the AC-3 Bitstream DIALNORM Metadata Correct

As shown in the example of FIG. 8, if the DIALNORM verification data is not contained within the AC-3 bitstream (step 801 NO output), then the AC-3 bitstream may be decoded to audio (e.g., PCM coded audio) (step 804) without applying the DIALNORM parameter and the related dynamic range control parameters to the audio (because those metadata parameters may be incorrect) so that the decoded audio content is at the same level as the input to the encoder that was used to create the bitstream. Next, the DIALNORM level of the decoded audio is measured (step 805). Such measurement of DIALNORM may be the same as performed by the Measure Level of Dialogue 104 described above. Following measurement of the level of dialogue in step 805, the measured value is compared, in step 806, to the AC-3 DIALNORM metadata value of the input AC-3 bitstream. As shown following the YES output of step 806, if that DIALNORM value is correct (YES output of step 806), the original DIALNORM value and the related original dynamic range compression information of the input AC-3 bitstream are applied to the decoded audio produced by the AC-3 Decode of step 804 to provide a decoded AC-3 audio bitstream to which the correct DIALNORM and dynamic range compression parameter values have been applied.

### Verification Data Not in the AC-3 Bitstream

### DIALNORM Metadata Incorrect

When the existing DIALNORM metadata is incorrect (NO output from step 806), it is necessary to set the DIALNORM value to the measured DIALNORM value of step 805 and determine new dynamic range compression information from that measured DIALNORM parameter value. This may be accomplished in step 815, which step may be the same as step 412. The measured DIALNORM value and the dynamic range compression information determined by step 815 may then be applied, in step 816, to the decoded digital or analog audio provided by step 804.

### Subsets of FIG. 8

As mentioned above, either all of the FIG. 8 process or subsets of the FIG. 8 process or devices employing steps of the processes may be employed.

One useful and inexpensive subset of the FIG. 8 process is to employ steps 801 through 803 and 814. If verification information exists in the bitstream (801 is YES), steps 802, 803 and 814 operate as described above to decode the AC-3 bitstream. If no verification information exists in the bitstream (the output 801 is NO), the bitstream may be decoded using its existing DIALNORM value and related dynamic range compression parameter values or by using a default DIALNORM value and related dynamic range compression parameter values.

Another useful, but somewhat more expensive, subset of the FIG. 8 process is to employ all but step 815. This avoids the computation required in determining the dynamic range compression information related to the measured DIALNORM. Operation is as just described in connection with FIG. 8, except that when step 806 determines that the existing DIALNORM is not correct, the input AC-3 bitstream may be decoded by setting DIALNORM and related dynamic range parameter values to a default value.

### Additional Background

### AC-3 Bit Allocation and Unused Data Bits

A simplified AC-3 encoder block diagram is shown in FIG. 9e. PCM audio samples are input to the frequency domain transform function 902. A 512-point modified discrete cosine transform (MDCT) with 50% overlap is used to window the input data to avoid block processing, edge artifacts. In the event of transient signals, improved temporal performance (reduced transient pre-noise) is achieved by using a block-switching technique in which two 256-point transforms are computed in place of the 512-point transform. The transform coefficients from function 902 are applied to a block floating point process 904 that segments each transform coefficient into exponent and mantissa pairs. The transform coefficient mantissas are quantized in the mantissa quantization function 906 with a variable number of bits assigned by the bit allocation function 908 that operates on a parametric bit allocation model in response to the block floating point exponents.

The AC-3 bit allocation model uses principles of psychoacoustic masking to select the number of bits allocated to each mantissa in a given frequency band. Depending on the extent of masking, some mantissas may receive very few bits or even no bits at all. This reduces the number of bits required to represent the source audio, at the expense of added (though inaudible) noise.

Unlike some other coding systems, AC-3 does not pass the bit allocation results to the decoder in the compressed audio bitstream. Instead, a parametric approach is taken in which the audio encoder constructs its masking model based on the transform coefficient exponents and a few key signal-dependent parameters. These parameters are passed from the bit allocation function 908 to the bitstream packing function 910 for passing to the decoder via the bitstream, requiring far fewer bits than would be necessary to transmit the raw bit allocation values. The bitstream packing function 910 that generates the encoded audio bitstream also receives the exponents and the quantized mantissas for inclusion in the bitstream. At the decoder, the bit allocation is reconstructed based on the received exponents and bit allocation parameters. This arrangement constitutes a hybrid backward/forward adaptive bit allocation.

The coding efficiency of AC-3 improves as the number of source channels increases due to two principle features: a global bit pool and high frequency coupling. The global bit pool technique allows the bit allocator to distribute available bits among the audio channels on an as-needed basis. If one or more channels are inactive at a specific time instant, the remaining channels receive more bits than they otherwise would.

In the AC-3 audio compression system, the bit allocation process employs a finite search. In each iteration of the search, the signal to noise (SNR) parameter is varied to control the allocation of bits. This also affects the values of other parameters. At the end of the search, if the number of used bits exceeds the number of allocated bits, the last legal allocation is used. Often, this allocation is not able to use all of the available bits, thereby leaving unused or wasted bits.

As discussed previously, an AC-3 serial coded audio bitstream is made up of a sequence of frames constructed as shown generally in FIG. 9a. Each AC-3 frame represents a constant time interval of 1536 PCM samples across all coded channels and contains six coded audio blocks (AB0 through AB5), each representing 256 new audio samples. Each AC-3 frame has a fixed size (one of several sizes in numbers of bits in the range of 64 to 1920 bits) that depends on the PCM sample rate (32 kHz, 44.1 kHz or 48 kHz) and the coded audio bitrate (discrete values in the range of 32 kbps to 640 kbps). The synchronization information (SI) header at the beginning of each frame contains information needed to acquire and maintain synchronization. The bitstream information (BSI) header follows the SI field, and contains parameters describing the coded audio service. The SI and BSI fields describe the bitstream configuration, including sample rate, data rate, number of coded audio channels, and several other systems-level elements. Following the coded audio blocks (AB0 through AB5) is an auxiliary data (AUX) field. At the end of each frame is an error check field that includes a CRC word (cyclic redundancy correction code word) for error detection. Additionally another CRC word is located in the SI header.

Although the width of the bitstream elements in FIG. 9a generally suggests a typical number of bits in each element, the figure is not to scale. The number of bits allocated and used in the audio blocks and in the AUX field is variable. Block AB0 is shown wider than the other blocks because each frame is essentially independent of other frames and blocks AB1 through AB5 may share information carried by block AB0 without repeating the information, allowing blocks AB1 through AB5 to carry fewer bits than block AB0. Aside from possible sharing, audio blocks also have variable length because of the variable number of bits that can be assigned to the quantized mantissa data in each block.

As explained in the above-cited U.S. Patent 6,807,528, unused bits exist in a frame whenever the bit allocation function in the encoder does not utilize all available bits for encoding the audio signal. This occurs if the final bit allocation falls short of using all available bits or if the input audio does not require all available bits. Because these unused bits should be placed somewhere in the frame in order for the frame to have a mandatory fixed size, the encoder inserts dummy or null bits in the bitstream in order to fill out the length of the frame. Such null bits are inserted in a "skip field" in one or more of the audio blocks (as shown in FIG. 9d) as well as in the AUX field. Each skip field accepts null bits in 8-bit bytes, while the aux field accepts up to seven null bits to provide "fine tuning" of the frame length and to assure that the final CRC word occurs in the last 16 bits of the frame. In practice, the null bits are random bits. Such null bits are wasted bits that carry no useful information. It is an aspect of the present invention to use the values of some or all of such null bits to carry information-bearing bits related to some of the AC-3 parameters contained within the bit-stream (particularly the DIALNORM parameter shown in FIG. 9c).

Null bits in skip fields and in the AUX field are skipped or ignored by the decoder. Although an AC-3 decoder is able to identify null bits and ignore them, the number of null bits and their location in the bitstream is not known *a priori* (their number and location varies from frame to frame, *i.e.,* the skip fields are of variable size and their starting positions in blocks AB1 through AB5 vary and, similarly, the AUX field is of variable size and its starting position varies) nor is it possible to discern their number and location by mere inspection of the AC-3 bitstream (null bits are random and are indistinguishable from other data in the bitstream).

Each audio block (AB0 through AB5) begins with "fixed data" made up of bitstream elements whose word sizes (bit lengths) are known *a priori* (*i*.*e*., these fixed data elements have a pre-assigned number of bits and are not assigned bits by bit allocation). Fixed data is a collection of parameters and flags including block switch flags, coupling information, exponents and bit allocation parameters. Following the fixed data is "skip field" data having a minimum size of 1 bit, if the skip field contains no null bits, and a maximum size of 522 bits, if it does contain null bits. A one-bit word, the minimum contents of a skip field, indicates if the skip field includes null bits. If it does, next, a 9-bit word indicates the number of bytes of null bits. This is followed by the null bytes. Following the skip is the mantissa data. The size of the mantissa data is variable and is determined by bit allocation.

Whether a particular audio block contains a skip field having null bits is determined by the following rules: 1) the combined size of the SYNCINFO fields (namely, the SYNCWORD, the first CRC word, the sampling frequency code word and the frame size code word), the BSI fields, audio block 0 (AB0) and audio block 1 (AB1) never exceeds 5/8 of the frame, and 2) the combined size of the audio block 5 (AB5) mantissa data, the AUX data field, and the error check field never exceeds the final 3/8 of the frame. The 5/8 and 3/8 configuration is used to reduce latency (the first CRC word applies to the first 5/8 of the frame, permitting faster decoding). In principle, were it not for the 5/8 and 3/8 configuration, all null bits could be inserted in the AUX field without a need for one or more skip fields.

The AUX data field has two functions. One function of the AUX data field, mentioned above, is to provide a fine tuning of the frame length and to assure that the last 16 bits of the frame is used for the second CRC word. Up to seven null bits are inserted in the AUX field. A second function of the AUX field, which is optional and is independent of the first function, is to carry additional information ("auxdata") at the expense of using bits that could otherwise be assigned to mantissas in the audio blocks. The last bit of the AUX data field indicates whether any optional auxdata exists. If the bit indicates that it does exist, the preceding 14-bit word indicates the length of the auxdata and the next preceding bits are the auxdata. Null bits, if any, in turn precede the auxdata in the AUX field. If the auxfield has no auxdata, the null bits, if any, precede the single bit at the end of the AUX data field that indicates if auxdata exists. Thus, whether or not there is auxdata, there may or may not be null bits it the AUX field. There are no null bits in the AUX field if there are no unused bits (it is possible for no unused bits to exist in a given frame but the probability of this occurring in many consecutive frames is extremely low) or if the number of null bits is divisible by eight and, thus, all of the null bits are carried in one or more skip fields.

In the standard AC-3 coding arrangement, null bits in the AUX field and/or the AUX field and one or more skip fields, are unused or wasted bits (i.e., they carry no useful information). In accordance with aspects of the present invention, as discussed above, some or all of such unused bits are replaced with information-carrying, metadata verification bits while preserving full compatibility with existing AC-3 encoders and decoders and avoiding any degradation of the encoded audio signals.

The new information-carrying bits preferably conform to a known or predetermined format or syntax so that they can be recovered by a metadata parameter (for example DIALNORM) verification decoder process. The replacement of wasted bits with metadata (DIALNORM) verification bits can be accomplished after any valid AC-3 encoder creates an AC-3 bitstream. For example, a conventional, unmodified AC-3 encoder may be employed to generate the standard AC-3 bitstream. The resulting bitstream is analyzed to identify the locations of some or all of the unused bits in each frame. Some or all of the identified unused bits are then replaced with information-carrying bits (DIALNORM verification data bits) that are embedded in locations formerly occupied by unused bits. Because some of the data is changed (some or all of the null bits are changed), the checksum for the entire frame is recalculated and the second CRC word, which applies to the entire frame, is replaced with a new CRC word, and, if data in the first 3/8 of the frame is changed, the checksum for that portion of the frame is recalculated and the first CRC word, which applies to the first 3/8 of the frame, is also replaced with a new CRC word.

Alternatively, instead of replacing some or all unused bits in an AC-3 bitstream with information-carrying bits following standard encoding, a modified AC-3 encoder that includes additional analysis and metadata verification capabilities may insert information-carrying bits in some or all of the unused bit positions of a frame instead of random null bits during the encoding process.

Whether the AC-3 bitstream is modified before or after the encoding process, the resulting modified bitstream appears the same to a conventional AC-3 decoder. An unmodified AC-3 decoder receiving the modified bitstream ignores the information-carrying bits in the same way it ignores or skips over null bits in the same bit locations. The information-carrying bits that replace unused bits can be recovered either in a modified AC-3 decoder or in a special AC-3 metadata analysis process that identifies the locations of unused bits in a frame, detects the data in the unused bit locations and reports the results of the metadata verification analysis performed on the AC-3 bitstream. In either case, recovery and analysis of the verification data replacing unused bits in AC-3 bitstream does not disturb the remainder of the bitstream. Thus, aspects of the present invention may preserve audio quality in two ways: it does not use bits that would otherwise be used for audio and it can avoid the need for decoding and re-encoding the bitstream (although this may be necessary and useful as described above).

### AC-3 Dialogue Level and Compression Metadata Parameters

As mentioned above, included in the AC-3 frame metadata is a parameter that indicates the loudness level of the speech or dialogue contained in the compressed audio. This parameter is called DIALNORM and the intent of this parameter is that before an audio item is encoded or data compressed, the predominant level of the dialogue or speech in the item is measured. This measurement is then used to set the DIALNORM parameter in each frame of the bitstream containing the compressed audio item. During playback of the bitstream, the AC-3 decoder uses the DIALNORM parameter to modify the playback level or loudness of the item, such that the perceived loudness of the dialogue is at a consistent level.

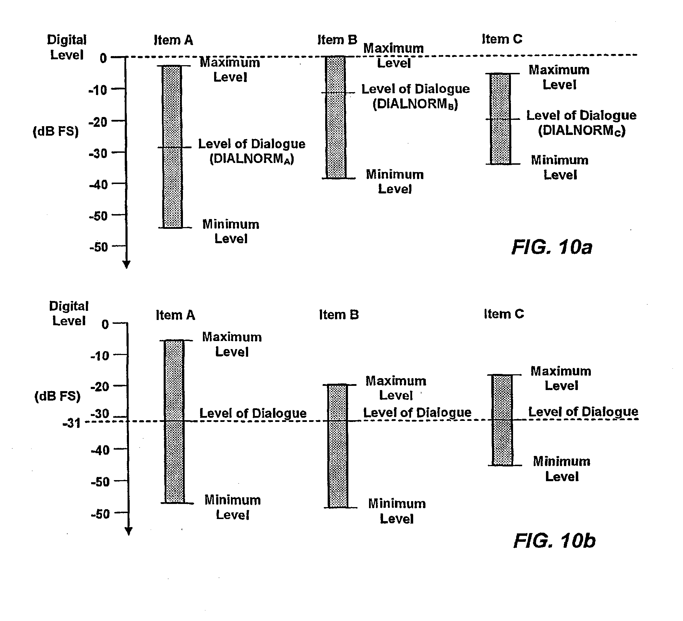

FIG. 10a shows an example containing three different audio items. The Digital Level is the level of the data compressed audio content relative to a digital full-scale sine wave (0 dB FS). The maximum and minimum level for each item is shown, along with the predominant level of the dialogue. The DIALNORM parameter for each item is the level of the dialogue, rounded to units of 1 dB. FIG. 10b shows how, during playback, the decoder scales the level of each item such that the level or loudness of the dialogue for each item is the same, or very similar. For the AC-3 system the reference level to which the dialogue of each item is scaled is -31 dB FS. This reference digital level can then be calibrated in a playback system to a desired sound pressure level.

The use of the DIALNORM parameter in AC-3 provides listeners with a more consistent and predictable listening experience by reducing dramatic loudness differences that exist between different audio items that are created by different people in different listening environments and for different purposes. However, the DIALNORM parameter may be incorrect for the reasons discussed above.

### Dynamic Range Compression

Also included in the AC-3 frame metadata are parameters that, if applied to the audio during playback, serve to reduce the dynamic range of the audio content. That is, make the louder parts of the audio quieter and the quiet parts of the audio louder. These dynamic range compression parameters are called COMPR and DYNRNG and are automatically calculated during the encoding of an AC-3 bitstream. See FIG. 9.

The ability to reduce the dynamic range of audio is useful in a variety of situations. For example, when watching a movie late at night, it is often necessary to listen at a reduced playback volume so as not to disturb sleeping family members or occupants in adjacent dwellings. Because movies tend to have a very large dynamic range, the reduced playback volume results in much of the movie being too quiet to be audible. The use of dynamic range compression helps to increase the quiet portions, making them audible, and reduce the loudest portions, making them less annoying.

The dynamic range compression parameters are calculated in reference to the level of the dialogue, as indicated by the DIALNORM parameter. This ensures that the average level of the dialogue is unaltered and that only the louder or softer portions of the audio item are altered.

FIG. 12 shows an example containing three different audio items. FIG. 12a shows the average dialog level and the dynamic range of the unprocessed audio items. FIG. 12b shows how during playback, the application of the dynamic range compression and the DIALNORM parameter result in a consistent average dialog level, and a reduced dynamic range output signal across all three items.

Because the dynamic range compression parameters are calculated in relationship to the dialogue level, their use relies on content creators measuring and setting the DIALNORM parameter correctly. If there is an error between the level of the dialogue as indicated by the DIALNORM parameter and the true level of the dialogue in the audio content, then it is likely that the dialogue will exhibit undesired and audible dynamic gain changes, due to the compression.

### DIALNORM2, COMPR2 and DYNRNG2

Under most circumstances, the AC-3 system uses a single dialogue level and a single set of dynamic range information parameters for all channels. However, AC-3 includes an operating mode that allows for two channels to operate independently; that is each channel has independent dialogue level and dynamic range information. In this mode, the second of the two channels uses the DIALNORM2, COMPR2 and DYNRNG2 parameters. (See FIG. 9.) Because DIALNORM2, COMPR2 and DYNRNG2 are interpreted and used in exactly the same way as DIALNORM, COMPR2, and DYNRNG, only the operation of the latter is described in this document.

### Implementation

The invention may be implemented in hardware or software, or a combination of both (*e.g*., programmable logic arrays). Unless otherwise specified, the algorithms or processes included as part of the invention are not inherently related to any particular computer or other apparatus. In particular, various general-purpose machines may be used with programs written in accordance with the teachings herein, or it may be more convenient to construct more specialized apparatus (*e*.*g*., integrated circuits) to perform the required method steps. Thus, the invention may be implemented in one or more computer programs executing on one or more programmable computer systems each comprising at least one processor, at least one data storage system (including volatile and non-volatile memory and/or storage elements), at least one input device or port, and at least one output device or port. Program code is applied to input data to perform the functions described herein and generate output information. The output information is applied to one or more output devices, in known fashion.

Each such program may be implemented in any desired computer language (including machine, assembly, or high level procedural, logical, or object oriented programming languages) to communicate with a computer system. In any case, the language may be a compiled or interpreted language.

It will be appreciated that some steps or functions shown in the exemplary figures perform multiple substeps and may also be shown as multiple steps or functions rather than one step or function. It will also be appreciated that various devices, functions, steps, and processes shown and described in various examples herein may be shown combined or separated in ways other than as shown in the various figures. For example, when implemented by computer software instruction sequences, various functions and steps of the exemplary figures may be implemented by multithreaded software instruction sequences running in suitable digital signal processing hardware, in which case the various devices and functions in the examples shown in the figures may correspond to portions of the software instructions.

Each such computer program is preferably stored on or downloaded to a storage media or device (*e*.*g*., solid state memory or media, or magnetic or optical media) readable by a general or special purpose programmable computer, for configuring and operating the computer when the storage media or device is read by the computer system to perform the procedures described herein. The inventive system may also be considered to be implemented as a computer-readable storage medium, configured with a computer program, where the storage medium so configured causes a computer system to operate in a specific and predefined manner to perform the functions described herein.
A number of embodiments of the invention have been described.
Nevertheless, it will be understood that various modifications may be made without departing from the scope of the invention. For example, some of the steps described herein may be order independent, and thus can be performed in an order different from that described.

## Claims

1. A digital bitstream, comprising data bits representing audio (101), metadata for the audio (101), and metadata verification information, said metadata verification information including a copy, or a data-compressed copy, of said metadata, said verification information being usable to detect whether or not the metadata and the copy thereof are within a threshold difference of each other, and if they are not, to replace the metadata with the copy.

2. A digital bitstream according to claim 1, wherein the metadata verification information is encrypted.

3. A digital bitstream according to any one of claims 1-2, wherein bits representing the metadata verification information replace all or some of a plurality of bits in the bitstream that ordinarily carry no information.

4. A digital bitstream according to any one of claims 1-3, wherein the metadata verification information is steganographically encoded in the bitstream.

5. A digital bitstream according to any one of claims 1-4, wherein the audio (101) is data-compressed audio.

6. An encoder (100) that generates a digital bitstream in accordance with any one of claims 1-5.

7. A decoder, receiving a digital bitstream in accordance with any one of claims 1-5, wherein the decoder decodes the data bits representing audio (101) using said metadata and said metadata verification information.

8. A decoder according to claim 7, wherein the decoder in decoding the data bits representing audio changes metadata using said metadata verification information and uses such changed metadata in decoding the audio (101).

9. A process for generating a digital bitstream in response to audio (101), the process comprising
generating metadata for the audio (101),
generating metadata verification information, said metadata verification information including a copy, or a data-compressed copy, of said metadata, the metadata verification information being usable to detect whether or not the metadata and the copy thereof are within a threshold difference of each other, and if they are not, to replace the metadata with the copy, and
assembling a digital bitstream that includes data bits representing the audio, the metadata and the metadata verification information.

10. A process according to claim 9, wherein said generating metadata generates metadata based on a measure of the audio (101).

11. A process according to claim 10, wherein said measure of the audio (101) is a measure of the loudness of the audio.

12. A process according to any one of claims 9-11, wherein the metadata verification information usable to detect and change metadata includes a copy, or a data-compressed copy, of a correct version of such metadata.

13. A process according to any one of claims 9-12, wherein the verification information is encrypted.

14. A process according to any one of claims 9-13, wherein bits representing the metadata verification information replace all or some of a plurality of bits in the bitstream that ordinarily carry no information.

15. A process according to any one of claims 9-13 wherein the verification information is steganographically encoded in the bitstream.

16. A process for treating a digital audio bitstream that includes data bits representing audio (101), audio metadata, and audio metadata verification information, said audio metadata verification information including a copy, or a data-compressed copy, of said audio metadata, said verification information being usable to detect whether or not the metadata and such a copy thereof are within a threshold difference of each other, and if they are not, to replace the metadata with the copy, comprising
changing (403) the metadata, and
changing (403) the verification information so that the metadata and the copy, or data-compressed copy, of the metadata are within said threshold difference of each other.

17. A computer program, stored on a computer-readable medium for causing a computer to perform the methods of any one of claims 9 through 16.

## Patentansprüche

1. Ein digitaler Bitstrom, der Daten-Bits aufweist, die Audio (101), Metadaten für das Audio (101) und Metadaten-Verifizierungsinformation repräsentieren, wobei die Metadaten-Verifizierungsinformation eine Kopie oder eine Daten-komprimierte Kopie der Metadaten aufweist, wobei die Verifizierungsinformation verwendbar ist zum Erfassen, ob die Metadaten und deren Kopie innerhalb einer Schwellendifferenz zueinander sind oder nicht, und wenn sie dies nicht sind, zum Ersetzen der Metadaten mit der Kopie.

2. Ein digitaler Bitstrom gemäß Anspruch 1, wobei die Metadaten-Verifizierungsinformation verschlüsselt ist.

3. Ein digitaler Bitstrom gemäß einem der Ansprüche 1-2, wobei Bits, die die Metadaten-Verifizierungsinformation repräsentieren, alle oder einige einer Vielzahl von Bits in dem Bitstrom ersetzen, die normalerweise keine Information tragen.

4. Ein digitaler Bitstrom gemäß einem der Ansprüche 1-3, wobei die Metadaten-Verifizierungsinformation steganographisch in dem Bitstrom codiert ist.

5. Ein digitaler Bitstrom gemäß einem der Ansprüche 1-4, wobei das Audio (101) Daten-komprimiertes Audio ist.

6. Ein Codierer (100), der einen digitalen Bitstrom in Übereinstimmung mit einem der Ansprüche 1-5 erzeugt.

7. Ein Decodierer, der einen digitalen Bitstrom gemäß einem der Ansprüche 1-5 empfängt, wobei der Decodierer die Daten-Bits, die Audio (101) repräsentieren, unter Verwendung der Metadaten und der Metadaten-Verifizierungsinformation decodiert.

8. Ein Decodierer gemäß Anspruch 7, wobei der Decodierer bei einem Decodieren der Daten-Bits, die Audio repräsentieren, Metadaten unter Verwendung der Metadaten-Verifizierungsinformation ändert und diese geänderten Metadaten bei einem Decodieren des Audios (101) verwendet.

9. Ein Verfahren zum Erzeugen eines digitalen Bitstroms in Reaktion auf Audio (101), wobei das Verfahren aufweist
Erzeugen von Metadaten für das Audio (101),
Erzeugen von Metadaten-Verifizierungsinformation, wobei die Metadaten-Verifizierungsinformation eine Kopie oder eine Daten-komprimierte Kopie der Metadaten aufweist, wobei die Metadaten-Verifizierungsinformation verwendbar ist zum Erfassen, ob die Metadaten und deren Kopie innerhalb einer Schwellendifferenz zueinander sind oder nicht, und wenn sie dies nicht sind, zum Ersetzen der Metadaten mit der Kopie, und Zusammensetzen eines digitalen Bitstroms, der Daten-Bits umfasst, die Audio, die Metadaten und die Metadaten-Verifizierungsinformation repräsentieren.

10. Ein Verfahren gemäß Anspruch 9, wobei das Erzeugen von Metadaten Metadaten basierend auf einem Maß des Audios (101) erzeugt.

11. Ein Verfahren gemäß Anspruch 10, wobei das Maß des Audios (101) ein Maß der Lautstärke des Audios ist.

12. Ein Verfahren gemäß einem der Ansprüche 9-11, wobei die Metadaten-Verifizierungsinformation, die zum Erfassen und Ändern von Metadaten verwendbar ist, eine Kopie oder eine Daten-komprimierte Kopie einer korrekten Version derartiger Metadaten umfasst.

13. Ein Verfahren gemäß einem der Ansprüche 9-12, wobei die Verifizierungsinformation verschlüsselt ist.

14. Ein Verfahren gemäß einem der Ansprüche 9-13, wobei Bits, die die Metadaten-Verifizierungsinformation repräsentieren, alle oder einige einer Vielzahl von Bits in dem Bitstrom ersetzen, die normalerweise keine Information tragen.

15. Ein Verfahren gemäß einem der Ansprüche 9-13, wobei die Verifizierungsinformation steganographisch in dem Bitstrom codiert ist.

16. Ein Verfahren zum Behandeln eines digitalen Audio-Bitstroms, der Daten-Bits umfasst, die Audio (101), Audio-Metadaten und Audio-Metadaten-Verifizierungsinformation repräsentieren, wobei die Audio-Metadaten-Verifizierungsinformation eine Kopie oder eine Daten-komprimierte Kopie der Audio-Metadaten umfasst, wobei die Verifizierungsinformation verwendbar ist zum Erfassen, ob die Metadaten und deren Kopie innerhalb einer Schwellendifferenz zueinander sind oder nicht, und wenn sie dies nicht sind, zum Ersetzen der Metadaten mit der Kopie, aufweisend Ändern (403) der Metadaten, und
Ändern (403) der Verifizierungsinformation, so dass die Metadaten und die Kopie oder Daten-komprimierte Kopie der Metadaten innerhalb der Schwellendifferenz zueinander sind.

17. Ein Computerprogramm, das auf einem computerlesbaren Medium gespeichert ist, um einen Computer zu veranlassen, die Verfahren gemäß einem der Ansprüche 9 bis 16 durchzuführen.

## Revendications

1. Train binaire numérique, comprenant des bits de données représentant l'audio (101), des métadonnées pour l'audio (101), et des informations de vérification de métadonnées, lesdites informations de vérification de métadonnées comprenant une copie ou une copie à compression de données desdites métadonnées, lesdites informations de vérification étant utilisables pour détecter si oui ou non les métadonnées et la copie de celles-ci sont à l'intérieur d'une différence de seuil l'une de l'autre, et si elles ne le sont pas, remplacer les métadonnées par la copie.

2. Train binaire numérique selon la revendication 1, dans lequel les informations de vérification de métadonnées sont chiffrées.

3. Train binaire numérique selon l'une quelconque des revendications 1 et 2, dans lequel des bits représentant les informations de vérification de métadonnées remplacent la totalité ou une partie d'une pluralité de bits dans le train binaire qui n'acheminent ordinairement aucune information.

4. Train binaire numérique selon l'une quelconque des revendications 1 à 3, dans lequel les informations de vérification de métadonnées sont encodées stéganographiquement dans le train binaire.

5. Train binaire numérique selon l'une quelconque des revendications 1 à 4, dans lequel l'audio (101) est l'audio à compression de données.

6. Encodeur (100) qui génère un train binaire numérique conformément à l'une quelconque des revendications 1 à 5.

7. Décodeur, recevant un train binaire numérique conformément à l'une quelconque des revendications 1 à 5, dans lequel le décodeur décode les bits de données représentant l'audio (101) en utilisant lesdites métadonnées et lesdites informations de vérification de métadonnées.

8. Décodeur selon la revendication 7, dans lequel le décodeur en décodant les bits de données représentant l'audio change des métadonnées en utilisant lesdites informations de vérification de métadonnées et utilise de telles métadonnées changées en décodant l'audio (101).

9. Processus pour générer un train binaire numérique en réponse à l'audio (101), le processus comprenant
la génération de métadonnées pour l'audio (101),
la génération d'informations de vérification de métadonnées, lesdites informations de vérification de métadonnées comprenant une copie ou une copie à compression de données desdites métadonnées, les informations de vérification de métadonnées étant utilisables pour détecter si oui ou non les métadonnées et la copie de celles-ci sont à l'intérieur d'une différence de seuil l'une de l'autre, et si elles ne le sont pas, remplacer les métadonnées par la copie, et
l'assemblage d'un train binaire numérique qui comprend des bits de données représentant l'audio, les métadonnées et les informations de vérification de métadonnées.

10. Processus selon la revendication 9, dans lequel ladite génération de métadonnées génère des métadonnées sur la base d'une mesure de l'audio (101).

11. Processus selon la revendication 10, dans lequel ladite mesure de l'audio (101) est une mesure de la sonie de l'audio.

12. Processus selon l'une quelconque des revendications 9 à 11, dans lequel les informations de vérification de métadonnées utilisables pour détecter et changer des métadonnées comprennent une copie ou une copie à compression de données d'une version correcte de telles métadonnées.

13. Processus selon l'une quelconque des revendications 9 à 12, dans lequel les informations de vérification sont chiffrées.

14. Processus selon l'une quelconque des revendications 9 à 13, dans lequel des bits représentant les informations de vérification de métadonnées remplacent la totalité ou une partie d'une pluralité de bits dans le train binaire qui n'acheminent ordinairement aucune information.

15. Processus selon l'une quelconque des revendications 9 à 13, les informations de vérification sont encodées stéganographiquement dans le train binaire.

16. Processus pour traiter un train binaire audio numérique qui comprend des bits de données représentant l'audio (101), des métadonnées audio et des informations de vérification de métadonnées audio, lesdites informations de vérification de métadonnées audio comprenant une copie ou une copie à compression de données desdites métadonnées audio, lesdites informations de vérification étant utilisables pour détecter si oui ou non les métadonnées et une telle copie de celles-ci sont à l'intérieur d'une différence de seuil l'une de l'autre, et si elles ne le sont pas, remplacer les métadonnées par la copie, comprenant
le changement (403) des métadonnées, et
le changement (403) des informations de vérification de sorte que les métadonnées et la copie ou la copie à compression de données de métadonnées soient à l'intérieur de ladite différence de seuil l'une de l'autre.

17. Programme informatique, stocké sur un support lisible par ordinateur pour amener un ordinateur à effectuer les procédés de l'une quelconque des revendications 9 à 16.
